# EUROPEAN PATENT APPLICATION

(11) **EP 1 606 997 A1**
(43) Date of publication of application: **21.12.2005**
(21) Application number: 03786372.7
(22) Date of filing: 26.12.2003
(51) Int. Cl.: A01N 1/02, A61K 9/19, A61K 35/14, A61K 47/42, A23L 3/36

(54) **METHOD OF INHIBITING FREEZE CONCENTRATING OF SUBSTANCE IN WET MATERIAL, METHOD OF INHIBITING DEACTIVATION OF PHYSIOLOGICALLY ACTIVE SUBSTANCE, AND PROCESS FOR PRODUCING LYOPHILIZATE OR FROZEN MATTER HAVING COMPONENT HOMOGENEOUSLY DIFFUSED THEREIN**

(30) Priority: 20.03.2003 JP 2003078977
(71) Applicant: National Institute of Advanced Industrial Science and Technology, Tokyo 100-8921 (JP); Nichirei Foods Inc., Tokyo 104-8402 (JP)
(72) Inventor: TSUDA, Sakae c/o National Institute of Ad Ind Sci, Toyohira Sapporo Japan (JP); MIURA, Ai c/o National Institute of Ad Ind Scienc, Toyohira-ku Sapporo Japan (JP); HIRAYAMA, Yasushi c/o Nichirei Corporation Food, Chiba-shi, Chiba 261-8545 (JP); INOUE, Toshifumi c/o Nichirei Food Inc., Mihama-ku Chiba-shi, Chiba-ken (JP); KITAGAWA, Akihiro c/o Nichirei Foods Inc., Chuo-ku, Tokyo (JP)
(74) Representative: Maiwald, Walter
(86) International application number: PCT/JP2003/017020
(87) International publication number: WO 2004/082378

(57) **Abstract**

An antifreeze protein is added to a hydrous material when the hydrous material contains water molecules and a substance other than water molecules, and freeze concentration of the substance should be inhibited; when the hydrous material contains a bioactive substance and inactivation of the bioactive substance should be inhibited; or when the hydrous material contains water molecules and a component other than the water molecules, and a frozen product or freeze-dried product in which the component is homogeneously dispersed should be produced.

## Description

### TECHNICAL FIELD

The present invention relates to a method for inhibiting freeze concentration of a substance contained in a hydrous material, a method for inhibiting inactivation of a bioactive substance, and a method for producing a frozen product or freeze-dried product in which a component is homogeneously dispersed.

### BACKGROUND ART

It is known that when a hydrous material containing water molecules and substances other than water molecules (e.g., solutes, contaminants, foreign matters, and the like; hereinafter referred to as "medium") is frozen, a phenomenon called freeze concentration occurs. In this phenomenon, water molecules are crystallized with each other while the medium is being excluded, and thereby ice crystals consisting of only water molecules are formed. For this reason, the medium is dispersed heterogeneously in the hydrous material, and accumulates in places other than those where the ice crystals are formed in the hydrous material.

Freeze concentration has been conventionally utilized in technologies for producing beverages such as production technologies for concentrated fruit juice or in foodstuffs, medicines, or waste water treatments.

In contrast to advanced technologies for utilizing the freeze concentration, techniques for inhibiting the freeze concentration have not yet advanced, although there is a wide variety of potential applicability.

When cells, for example, are frozen, water molecules move and ice is formed in the cells, accompanied by freeze concentration. For this reason, the internal structures and contents of the cells are forced to be significantly moved, or be pressed or damaged. Consequently, when the frozen cells are thawed, it is difficult for them to return to the state they were in before freezing. For this reason, when biogenic cells such as sperm or ova, or blood typically containing blood cells are frozen, the cells may be damaged. In addition, freezing of meat or vegetables may deteriorate the taste thereof. Similarly, in the case of freezing an aqueous solution of a bioactive substance including, for example, a protein such as an enzyme or a variety of medicaments, the bioactivity of the bioactive substance is markedly deteriorated. Accordingly, it is very important to develop techniques for inhibiting the freeze concentration.

In the field of medicine, methods for inhibiting the freeze concentration have been demanded for cryopreservation of a variety of substances such as blood, sperm, ova, tissues and organs.

In the field of foodstuffs, the freeze concentration during freezing destroys the internal structure of foodstuffs such as meat, vegetables, seafood, frozen confectionery products, and processed food. Thereby, various nutritional components, umami components, additives, and the like, are forced to move to places other than the ice. As a result, remarkable deterioration in quality is caused, and this may be a problem. For this reason, methods for effectively inhibiting the freeze concentration are also demanded in the field of food.

In freeze-drying techniques utilized in the production of pharmaceutical preparations and foodstuffs, inhibition of the freeze concentration is also important during freeze-drying. Specifically, the freeze concentration, once occurred, inhibits the uniform dispersion of pharmaceutical components or various umami components, and causes remarkable deterioration in the quality of products (freeze-dried products).

Ice for displaying which is uniformly colored red or blue has been demanded for ice used in eating and drinking establishments (in the field of ice making) or ice festivals and ice-sculpture festivals held in cold climate areas. However, it is difficult to produce such uniformly colored ice, and therefore, efforts, time and cost may be increased. For this reason, demands have been made on techniques for producing, for example, frozen products in which components such as coloring materials are uniformly dispersed.

A method of using an antifreeze protein (hereinafter referred to as "AFP") is proposed as a possible candidate for improving the quality of frozen foods such as ice creams. Published Japanese Translation No. 2000-515751 of PCT Application, for example, discloses a process for the recovery of AFPs from natural sources, and a frozen food product containing an AFP. PCT International Publication No. WO 90/13571 discloses antifreeze peptides produced by recombinant DNA techniques, and also reports that antifreeze peptides are applicable to foodstuffs such as ice creams.

AFPs are biological materials having a unique property of inhibiting the growth of ice nucleation particles by being specifically adsorbed on the surface of fine ice crystals (ice nucleation particles) formed at freezing temperatures. It is not yet known, however, whether AFPs inhibit freeze concentration occurring inside of a frozen material, in which the ice crystals are growing.

### DISCLOSURE OF INVENTION

The present invention provides a technique for inhibiting the freeze concentration using an AFP.

The present inventors devised a method in which a color ink is added dropwise to water to yield colored water, the colored water is frozen, and the freeze concentration of an ink component that has occurred during freezing is photographed with a camera. This is a clear model experimental system for verifying the inhibition of freeze concentration. In addition, as a result of intensive investigations to determine whether or not a freeze-dried powder of an AFP dissolved in the water colored with the color ink inhibits the freeze concentration of the ink component, it was found that the addition of an AFP markedly reduces the freeze concentration of the ink component and thereby yields ice that is entirely homogeneously colored, thus completing the present invention.

That is, the present invention provides, for solving the above problems, in a first aspect, a method for inhibiting the freeze concentration of a substance other than water molecules in a hydrous material during the freezing of the hydrous material, the hydrous material containing water molecules and the substance other than water molecules, the method including a step of adding an AFP to the hydrous material (hereinafter referred to as "freeze-concentration inhibiting method").

In a second aspect, the present invention provides, for solving the problems, a method for inhibiting inactivation of a bioactive substance contained in a hydrous material during freezing of the hydrous material, the method including a step of adding an AFP to the hydrous material (hereinafter referred to as "inactivation inhibiting method"). The term "bioactive substance" used in the present specification refers to all "substances each having a physiological activity (bioactivity)."

In a third aspect, the present invention provides, for solving the problems, a method for producing a frozen product or freeze-dried product by freezing or freeze-drying a hydrous material containing water molecules and a component other than water molecules, in which the component is homogeneously dispersed in the frozen product or freeze-dried product, the method including a step of adding an AFP to the hydrous material (hereinafter, may be referred to as "frozen product producing method").

### BRIEF DESCRIPTION OF THE DRAWINGS

Fig. 1A is a schematic diagram illustrating freezing of water in the case of adding no AFP (AFP-).
Fig. 1B is a schematic diagram illustrating freezing of water in the case of adding an AFP (AFP+).
Fig. 2A is a schematic diagram illustrating freezing of colored water in the case of adding no AFP (AFP-).
Fig. 2B is a schematic diagram illustrating freezing of colored water in the case of adding an AFP (AFP+).
Fig. 3A is a photograph of ice prepared by freezing colored water in the case of adding no purified AFP (III) (AFP-) in Freeze Concentration Inhibition Test 1.
Fig. 3B is a photograph of ice prepared by adding a purified AFP (III) to colored water (AFP+) and freezing the resulting colored water in Freeze Concentration Inhibition Test 1.
Fig. 4A is a photograph of ice prepared by dissolving a color ink in water and freezing the resulting colored water without adding a protein thereto in Freeze Concentration Inhibition Test 2.
Fig. 4B is a photograph of ice prepared by dissolving a color ink in water, adding hen egg white lysozyme thereto, and freezing the resulting colored water in Freeze Concentration Inhibition Test 2.
Fig. 4C is a photograph of ice prepared by dissolving a color ink in water, adding bovine serum albumin thereto, and freezing the resulting colored water in Freeze Concentration Inhibition Test 2.
Fig. 4D is a photograph of ice prepared by dissolving a color ink in water, adding a purified AFP (III) thereto, and freezing the resulting colored water in Freeze Concentration Inhibition Test 2.
Fig. 5A is a photograph of ice prepared by dissolving a red ink (A) in water and freezing the resulting colored water in the presence of a purified AFP (III) (AFP+) in Freeze Concentration Inhibition Test 3.
Fig. 5B is a photograph of ice prepared by dissolving a yellow ink (B) in water and freezing the resulting colored water in the presence of a purified AFP (III) (AFP+) in Freeze Concentration Inhibition Test 3.
Fig. 5C is a photograph of ice prepared by dissolving a blue ink (C) in water and freezing the resulting colored water in the presence of a purified AFP (III) (AFP+) in Freeze Concentration Inhibition Test 3.

### BEST MODE FOR CARRYING OUT THE INVENTION

The present invention will be described in more detail below.

### Freeze-Concentration Inhibiting Method

The freeze-concentration inhibiting method according to the present invention is a method including the step of adding an AFP to a hydrous material before freezing the hydrous material, in which the hydrous material contains water molecules and a substance other than water molecules.

The "hydrous material containing water molecules and a substance other than water molecules" is not specifically limited and can be any of liquids and solids. As familiar examples thereof, mention may be made of an aqueous solution comprising a solute and a solvent, a mixture of water and a substance insoluble in water, cereals, noodles, vegetables, fruits, meat, seafood, frozen confectionery products, processed foodstuffs, pharmaceutical preparations, diagnostic products, chemicals, cosmetics, blood, sperm, ova, cells, tissues, organs, and the like.

The "protein" used in the present invention refers to a substance comprising two or more amino acids bonded through a peptide bond. A small protein having not more than about 30 amino acid residues may be conventionally referred to as a "peptide" and be distinguished from a protein. However, the term "antifreeze protein (AFP)" used in the present invention does not distinguish between a peptide and a protein, each having antifreezing capability, and includes both of these.

AFPs are biophylactic substances that are specifically bound to the surfaces of ice crystals formed in cells at freezing temperatures to prevent the growth of ice crystals in vivo typically in fish to prevent their tissues from freezing. AFPs were first found about 35 years ago in the blood of a fish belonging to the *Nototheniidae* family living in the Antarctic Ocean. Investigations have been made mainly on fish living in and around the Arctic Ocean and the Antarctic Ocean, and thereafter in the Labrador Gulf. AFPs have also been found in other organisms such as fungi, insects, and plants, in addition to fish. The structures and functions of these are now under investigation across the world.

The antifreezing capability of an AFP is evaluated by how much the AFP can lower the freezing point of a hydrous material containing the added AFP (thermal hysteresis (°C)).

AFPs derived from fish are classified into four types, namely Types I, II, III and IV.

Type I has a high Ala content, comprises Thr and Asp residues at regular intervals and has an alpha helix structure. Type II has a high Cys content (8%) and has a structure analogous to C-lectin. Type III is a protein having a helical spherical structure. Type IV has a high Gln residue content and is predicted to have a bundle structure of alpha helixes.

AFPs have amphipathicity and are capable of dissolving in water to a high concentration, regardless of their types of Type I, Type II, and the like.

The AFP used in the present invention may be any of Types I, II, III and IV. Types I, II and III, however, are preferably used typically in view of their availability and cost.

The AFP preferably has a weight-average molecular weight Mw of 1,500 for satisfactorily penetrating into cells. The weight-average molecular weight Mw herein is determined by gel filtration chromatography using bovine pancreas aprotinin (Mw of 6,500), hen egg white lysozyme (Mw of 14,000), and soybean trypsin inhibitor (Mw of 21,500) as reference materials.

In order to obtain inhibitory effects of AFPs on freeze concentration, the AFP is preferably added so that the AFP concentration in the hydrous material is not less than 0.02% by weight with respect to the weight of the hydrous material. In particular, when the AFP concentration is within a range of from 0.03% by weight to 0.05% by weight, the maximum inhibitory effects on freeze concentration can be obtained, and at the same time, the cost can be reduced. Therefore, this is preferable.

The procedure of adding the AFP to the hydrous material is not specifically limited in the present invention and can be suitably selected from among conventional procedures according to the type of hydrous material.

When the hydrous material is, for example, a liquid such as an aqueous solution or blood, it is sufficient to mix a powder or aqueous solution of the AFP as is with the hydrous material. When the hydrous material is, for example, a cell or tissue, an aqueous solution of the AFP may be injected into the hydrous material typically using a syringe. It is also acceptable to allow the AFP to penetrate the hydrous material, for example, by immersing the hydrous material in an aqueous solution of the AFP and applying a pressure of 50 to 2,000 kg/cm² thereto.

The hydrous material has a pH preferably ranging from 2.0 to 11.0, and more preferably ranging from 4.0 to 8.0, when the AFP is added. Controlling the pH of the hydrous material within this range can prevent denaturation of the AFP and thereby inhibit any decrease in the inhibitory effects on freeze concentration.

The hydrous material is at a temperature preferably ranging from 0°C to 70°C, and more preferably ranging from 4°C to 30°C when the AFP is added. Controlling the temperature of the hydrous material within this range can prevent denaturation of the AFP and thereby inhibit any decrease in the inhibitory effects on freeze concentration.

In the present invention, the hydrous material can be frozen by a conventional or standard freezing device or a process suitably selected according to the type of hydrous material. For example, the hydrous material may be frozen by using a household or industrial-use freezer or by leaving outdoors at not more than 0°C during wintertime.

The temperature during the freezing of the hydrous material can be appropriately set in view of the concentration of the substance other than water in the hydrous material, the antifreezing capability of the AFP, the amount of the AFP, and the like. The temperature is preferably -10°C or below, and more preferably ranges from -10°C to -80°C. The hydrous material is preferably frozen at decreased temperature, since the AFP exhibits higher inhibitory effects on freeze concentration as the freezing temperature is decreased.

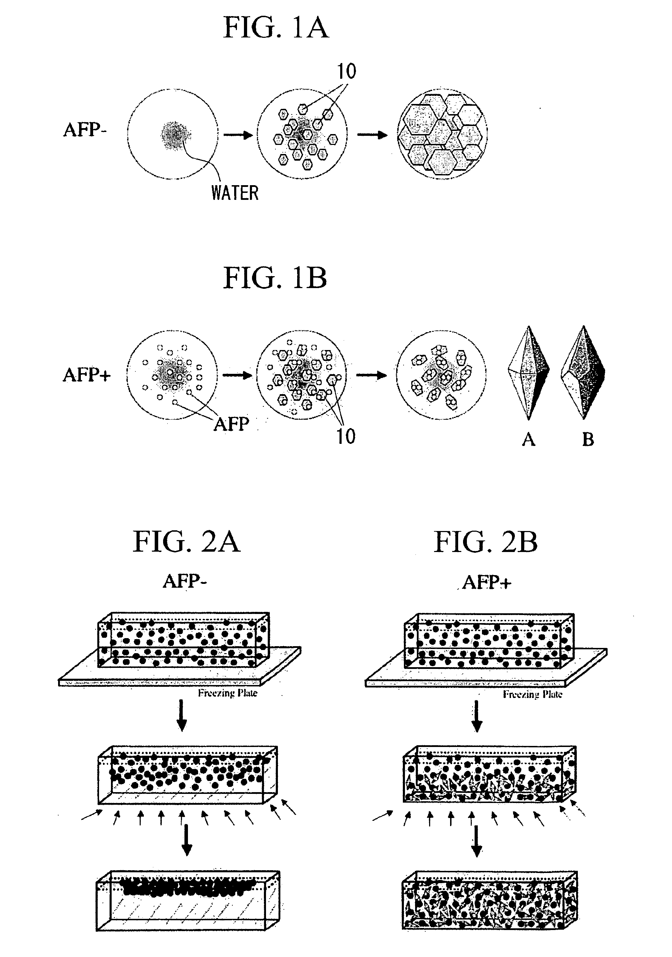

Next, the freezing phenomenon of water at freezing temperatures will be described with reference to Figs. 1A and 1B.

Fig. 1A shows the case in which an AFP is not added (AFP-), and Fig. 1B shows the case in which an AFP is added (AFP+).

In the case of AFP- (Fig. 1A), when water is exposed to freezing temperatures (the left view), water molecules are combined with one another to form a network. Many ice crystals called ice nucleation particles 10 (embryo ice crystals) are formed in water (the central view), and the individual crystals grow. The grown ice nucleation particles 10 are combined with one another to form an aggregate (the right view). The aggregate of the grown crystals of the ice nucleation particles 10 is so-called "ice".

In the case of AFP+ (Fig. 1B), the AFP (represented by an open circle in the drawings) is specifically bound to the plane surfaces of ice layers in single crystals of ice nucleation particles 10 formed at freezing temperatures to thereby inhibit the growth thereof (the central view). Consequently, the plane surfaces of ice layers are covered by the AFP to thereby form a large number of fine, independent ice nucleation particles 10 (the right view).

The ice nucleation particles 10 with the plane surfaces of ice layers covered by the AFP often form bipyramidal ice crystals represented by A or B in Fig. 1B. These bipyramidal ice crystals are crystallographically referred to as dihexahedrons (A) or hexagonal trapezohedrons (B).

These ice crystals are fine crystals having a length in a major axis (c-axis) direction of about 50 to 500 µm. Perfect bipyramidal ice crystals may not be formed or ice crystals having different forms may be formed with some types of AFP or under some conditions for the aqueous solution. In any case, however, many fine ice crystals are formed due to the binding of AFP.

Next, mechanisms of freeze concentration and of inhibition of freeze concentration due to the addition of an AFP will be described below. Fig. 2A illustrates the case in which the AFP is not added (AFP-), and Fig. 2B illustrates the case in which the AFP is added (AFP+).

The freeze concentration likely occurs according to the following mechanism. That is, when a freezing phenomenon occurs, water molecules are combined with each other to form a network, as described above. The water molecules have a property of combining with each other alone to grow to a larger size. For this reason, all the substances other than water molecules are physically excluded from the network during the formation of the network, regardless of the type and amount of the other substances. As a result, the substances other than water molecules move (are heterogeneously dispersed) to the parts where the network is not formed to thereby induce freeze concentration.

With reference to Fig. 2A, red colored water prepared by adding a red ink dropwise to water, for example, appears as water containing a homogeneously dispersed red ink component (represented by a solid circle in the drawing), when microscopically viewed (the upper schematic view in Fig. 2A). When a container housing the colored water is left to stand in a freezer, ice nucleation particles are formed from the bottom of the container in contact with the cooled inside wall of the freezer, and then they grow to form ice over time. The ink component accumulates toward one direction due to the effects of freeze concentration (the middle view in Fig. 2A). The freeze concentration of the ink component further proceeds over time to thereby form ice having an ice portion and a pigment portion separately when viewed macroscopically (the lower view in Fig. 2A).

In contrast, when colored water is prepared by adding a red ink dropwise to water and further adding an AFP (the upper view in Fig. 2B) and is left to stand in a freezer in the same manner as that described above, the AFP binds with ice nucleation particles formed from the bottom of the container in contact with the cooled inside wall of the freezer.

The binding of the AFP inhibits the crystal growth of the ice nucleation particles as described above, and the ice nucleation particles grow in the c-axis direction to form, for example, bipyramidal ice crystals having minute sizes ranging from about 50 to about 500 µm. These bipyramidal ice crystals have a resistance to combining with each other, and thus spaces are formed between ice crystals. The binding of the AFP with the bipyramidal ice crystals prevents further binding of free water present between the crystals to thereby inhibit the growth of the ice crystals, and at the same time to inhibit movement of the pigment component. Consequently, a mixture condition of the ink component with the ice crystals can be formed without the ink component being accumulated toward one direction (the middle view in Fig. 2B).

Bipyramidal ice crystals are formed throughout the entire colored water while the heterogeneous dispersion of the ink component is inhibited, to thereby finally form a homogeneous dispersion of the color ink component and the ice crystals, as illustrated in the lower view in Fig. 2B.

Specifically, the ink component is held in the spaces between the fine bipyramidal ice crystals formed during the freezing of the hydrous material. For this reason, it may be believed that the heterogeneous dispersion of the ink component is inhibited and the freeze concentration is markedly reduced.

Any hydrous material containing water molecules and a substance other than the water molecules is naturally frozen according to the manner illustrated in the upper schematic view in Fig. 1 and the schematic views in Fig. 2A. Specifically, when the hydrous material is exposed to subzero temperatures, ice nucleation particles are formed inside the hydrous material and are combined with each other to form ice. The ice crystals further grow and are combined with each other repetitively to form a large ice crystal (lump of ice).

The aforementioned cereals, noodles, vegetables, fruits, meat, seafood, frozen confectionery products, processed foodstuffs, pharmaceutical preparations, diagnostic products, chemicals, cosmetics, blood, sperm, ova, cells, tissues, organs, and the like, have different internal structures and contain significantly different amounts and types of water and components other than water. From the viewpoint of freeze concentration, however, they can be essentially deemed as hydrous materials each comprising two components, i.e., "water molecules" and a "substance other than water molecules." The freezing phenomenon of these can be schematically illustrated by the upper view in Fig. 1 and Fig. 2A. In this case, the solid circle in Fig. 2 represents the "substance other than water molecules."

In the case of the presence of the AFP, as shown in Fig. 2B, the "substance other than water molecules" contained in the hydrous material is free from forced significant movement with the formation of ice and is prevented from concentrating. This prevents the molecules of the substance from pressing and damaging each other due to the approaching of the molecules. Consequently, the hydrous materials can be recovered after thawing in the state they were in before freezing.

### Inactivation Inhibiting Method

The inactivation inhibiting method according to the present invention is a method comprising a step of adding an AFP to a hydrous material containing a bioactive substance before freezing the hydrous material.

The term "bioactive substance" in the present specification refers to any "substance having a physiological activity." Among such bioactive substances to which the inactivation inhibiting method according to the present invention is applied, preferred examples are biogenic substances such as antibiotics, functional food additives, cell differentiation inducing substances, functional lipids such as DHA and EPA, low-molecular-weight compounds, hormones, vitamins, peptides, enzymes, antibodies, proteins, and the like. As examples of the "hydrous material", mention may be made of aqueous solutions containing the bioactive substance, biological cells, tissues, organs, body fluids such as blood, microorganisms such as bacteria and viruses, and the like.

The "hydrous material containing a bioactive substance" and "bioactive substance" correspond to the "hydrous material" and the "substance other than water molecules", respectively, in the aforementioned freeze-concentration inhibiting method. The addition of the AFP inhibits the freeze concentration of the bioactive substance.
Consequently, the bioactive substance retains its activities, since proteins or other components constituting various cells such as cell walls, lipids and nucleic acids are prevented from pressing and damaging each other.

Conditions for carrying out the inactivation inhibiting method according to the present invention, such as the amount of the AFP added to the hydrous material containing a bioactive substance, pH and temperature of the hydrous material during the addition of the AFP, and the like, are the same as those described in the aforementioned freeze-concentration inhibiting method.

The concentration of the bioactive substance in the hydrous material containing the bioactive substance is not specifically limited, and preferably ranges from 1 ng/ml to 50 mg/ml, and more preferably ranges from 50 ng/ml to 30 mg/ml. When the bioactive substance has a concentration within this range, the effects of inhibiting inactivation by the action of the AFP are high, and therefore, this is preferable.

### Frozen Product Producing Method

The frozen product producing method according to the present invention comprises the step of adding an AFP to a hydrous material before freezing or freeze-drying of the hydrous material, the hydrous material containing water molecules and a component other than water molecules.

As examples of the resulting frozen products, mention may be made of frozen confectionery products such as ice creams, sherbets, and flavored ice shavings, ice for displaying, ice for food and drink (e.g., spherical ice), frozen meat, frozen fish, frozen vegetables, frozen fruits, frozen noodles, cooked frozen foodstuffs, frozen organs, frozen cells, frozen body fluids, frozen sperm, frozen ova, frozen chemicals, frozen diagnostic products, and the like.

As examples of the freeze-dried product, mention may be made of pharmaceutical preparations produced by freeze drying, and powdered freeze-dried foodstuffs.

The components other than water molecules are not specifically limited. In the field of medicine, for example, as examples thereof, mention may be made of various components with or without physiological activities contained in pharmaceutical preparations produced by freeze drying. In the field of food, as examples thereof, mention may be made of powdered or liquid foodstuffs, flavoring materials such as saccharides, and a variety of food additives. In the case of ice for displaying, as examples thereof, mention may be made of coloring materials such as pigments and dyes.

The "hydrous material containing a component other than water molecules" and the "component other than water molecules" correspond to the "hydrous material" and the "substance other than water molecules", respectively, described in the aforementioned freeze-concentration inhibiting method. The addition of the AFP inhibits the freeze concentration of various components. As a result, a frozen product or freeze-dried product containing the component such as a pigment homogeneously dispersed entirely can be obtained. The freeze-drying procedure can be carried out according to a conventional procedure.

Conditions for carrying out the frozen product producing method according to the present invention, such as the amount of the AFP added to the hydrous material, pH and temperature of the hydrous material during the addition of the AFP are the same as those described in the aforementioned freeze-concentration inhibiting method.

The concentration of each of the components in the hydrous material is not specifically limited and preferably ranges from 1 ng/ml to 50 mg/ml, and more preferably ranges from 50 ng/ml to 30 mg/ml. When the component concentration is within this range, uniform dispersing effects due to the AFP are increased, and therefore, this is preferable.

### EXAMPLES

In the following, Examples of the present invention will be illustrated. It should be understood that the present invention is not particularly limited to these Examples.

### "AFP Preparation Example 1"

AFP (III) derived from *Zoarces elongatus* was prepared under the following conditions. The whole fish of *Zoarces elongatus* was purchased from Notsuke Fisheries Cooperative Association, Hokkaido (179-2, Odaito Minato-machi, Bekkai-cho, Notsuke-gun, Hokkaido, Japan).

First, a whole fish of *Zoarces elongatus* was thoroughly washed with water, after which the head and visceral organs were removed with a kitchen knife.

Next, the residual body (about 120 g) was divided into five equal parts with a kitchen knife, and an equal amount (120 mL) of a 0.1 M aqueous solution of ammonium bicarbonate (pH of 7.9) was added thereto. The mixture was placed in a juicing blender (available from Tescom; PALCOOKIN; capacity of 780 mL) and was pulverized for about one minute.

The resulting minced meat of *Zoarces elongatus* was subjected to centrifugal separation with a high-speed microcentrifuge (HITACHI himac CF7D2) at 3,000 rpm for 30 minutes, and thereby 150 mL of supernatant was recovered. This was placed in a dialysis tube (Spectra/Por MWCO: 3,500) and was subjected to dialysis with a 50 mM sodium acetate buffer (pH of 3.7) overnight.

The contents of the dialysis tube were then subjected to a high-speed microcentrifuge (HITACHI himac CF15R) at 11,000 rpm for 30 minutes, and thereby 150 mL of supernatant was recovered. This was placed in a dialysis tube (Spectra/Por MWCO: 3,500) and was subjected to dialysis with a 0.1 M aqueous solution of ammonium bicarbonate (pH of 7.9) overnight.

The contents of the dialysis tube were then subjected to a high-speed microcentrifuge (HITACHI himac CF15R) at 11,000 rpm for 30 minutes, and thereby 140 mL of supernatant was recovered. The supernatant was placed in a beaker, and 1 g of activated carbon (WAKO PURE CHEMICAL INDUSTRIES LTD., Analytical Grade 037-02115) was added, followed by stirring for 5 minutes. This was filtrated using an injector filter (pore size of 0.2 µm) and was freeze-dried.

The weight of the freeze-dried powder was 330 mg. The electrophoretic analysis thereof revealed that the dried powder was a purified product of AFP (III) (hereinafter referred to as "purified AFP (III)") derived from *Zoarces elongatus* and having a purity of about 80%. The capability of the AFP at inhibiting the growth of ice crystals is not affected by contaminated proteins, and for this reason, this purity was assessed to be necessary and sufficient.

By carrying out the purification experiments in parallel, a total of 1,120 mg of purified AFP (III) having the same purity was prepared over 5 days. This was subjected to the following Freeze Concentration Inhibition Tests 1 to 3.

### "Freeze Concentration Inhibition Test 1"

In a plastic container (105 mm X 28 mm X 28 mm), 50 mL of tap water was placed. A total of 150 µL of a red ink available from PILOT Corporation was added dropwise thereto and the mixture was thoroughly stirred to yield red-colored water.

The colored water in which any other substances were not added was used as Solution A (AFP-). Separately, 10 mg (0.02% by weight) of the dried powder of the purified AFP (III) was added to the aforementioned colored water and the mixture was thoroughly stirred, to thereby yield Solution B (AFP+).

Solution A and Solution B were frozen by leaving to stand in a freezing chamber (-18°C) of a household refrigerator-freezer overnight.

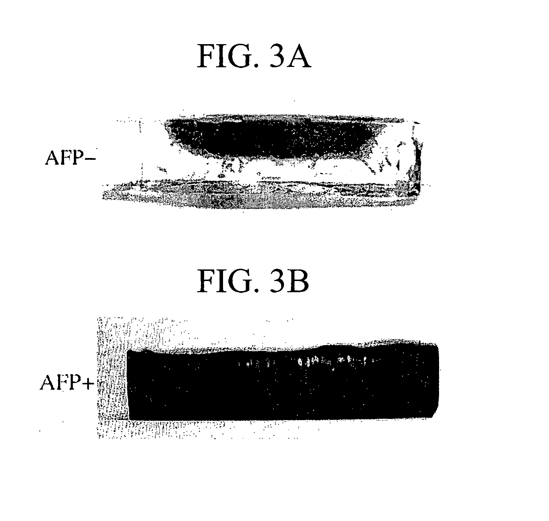

Photographs of the resulting ice prepared from Solution A and Solution B are shown in Figs. 3A and 3B, respectively.

Regarding Solution A (AFP-), the red ink component accumulated toward one direction in the ice and was concentrated in accordance with the mechanism of the freeze concentration illustrated in Fig. 2A. This allowed separation of an ice portion and an ink portion and yielded ice having transparent peripheries (Fig. 3A).

In contrast, the ice prepared from Solution B (AFP+) was a red-colored ice containing the red ink component dispersed entirely (Fig. 3B). This may have been caused by the AFP effectively inhibiting the freeze concentration of the red ink component according to the mechanism illustrated in Figs. 2D to 2F.

Another test was carried out in the same manner as that described above, with the exception of varying the concentration of the purified AFP (III) within a range of 0.01% by weight to 0.1% by weight. As a result, the most homogeneously red-colored ice was prepared at concentrations of the purified AFP (III) of from about 0.03% by weight to about 0.05% by weight.

### "Freeze Concentration Inhibition Test 2"

In order to verify that AFPs have higher inhibitory effects on freeze concentration than other proteins, the inhibitory effects of regular proteins, i.e., hen egg white lysozyme and bovine serum albumin, on freeze concentration were determined and were compared with those of AFPs.

First, 50 mL of tap water was placed in a plastic container (60 mm X 60 mm X 55 mm). A total of 50 µL of a red ink available from PILOT Corporation was added dropwise thereto and the mixture was thoroughly stirred to yield red-colored water.

Then, four Sample Mixtures A to D were prepared by adding to the red-colored water:
A) nothing;
B) 16 mg of dried powder of hen egg white lysozyme;
C) 16 mg of dried powder of bovine serum albumin; or
D) 16 mg (0.03%) of dried powder of the purified AFP (III), respectively. Each of the sample mixtures was thoroughly stirred and was frozen by leaving to stand in a freezing chamber (-18°C) of a household refrigerator-freezer overnight.

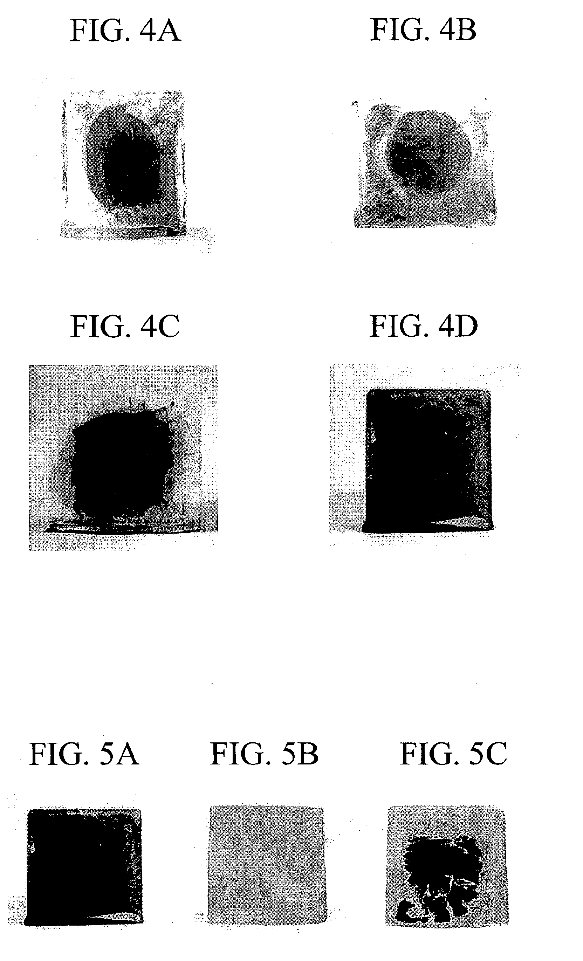

Figs. 4A to 4D are photographs of ice prepared from Sample Mixtures A to D, respectively.

Figs. 4A, 4B and 4C show that the red ink component was freeze-concentrated in a specific part in the resulting ice in these samples.

In contrast, Fig. 4D shows that the addition of AFP significantly reduced the freeze concentration to form homogeneously red-colored ice containing an entirely dispersed red ink component.

### "Freeze Concentration Inhibition Test 3"

By utilizing the inhibitory effects of AFP on freeze concentration, yellow-colored ice and blue-colored ice were prepared in addition to red-colored ice.

First, 50 mL of tap water was placed in a plastic container (60 mm X 60 mm X 55 mm). Solution A (red), Solution B (yellow) and Solution C (blue) were prepared by adding 50 µL of a red ink available from PILOT Corporation dropwise to the tap water, by dissolving 0.2 g of a yellow paint available from Pentel Co., Ltd., in the tap water, and by dissolving 0.2 g of a blue paint available from Pentel Co., Ltd., in the tap water, respectively. These solutions were thoroughly stirred.

Next, 16 mg (0.03% by weight) of dried powder of the purified AFP (III) was added to each of Solutions A to C. The solutions were thoroughly stirred and were frozen by leaving to stand in a freezing chamber (-18°C) of a household refrigerator-freezer overnight.

Figs. 5A to 5C are photographs of ice prepared from Solutions A to C, respectively. Thus, homogeneously red-, yellow- or blue-colored ice could be prepared.

### INDUSTRIAL APPLICABILITY

According to the present invention, as is described above, the freeze concentration of a substance other than water molecules in a hydrous material containing water molecules and the aforementioned substance can be inhibited by adding an AFP to the hydrous material before freezing the hydrous material. This markedly reduces any deterioration in quality, destruction of the internal structure and loss of bioactivities, each caused by the freeze concentration. In addition, entirely homogeneously colored ice can be produced.

## Claims

1. A method for inhibiting freeze concentration of a substance other than water molecules contained in a hydrous material during freezing of the hydrous material, the hydrous material containing water molecules and the substance other than water molecules, wherein the method comprises a step of adding an antifreeze protein to the hydrous material.

2. The method for inhibiting the freeze concentration of a substance other than water molecules contained in a hydrous material according to claim 1, wherein the hydrous material has a pH ranging from 2.0 to 11.0 in the step of adding an antifreeze protein to the hydrous material.

3. The method for inhibiting the freeze concentration of a substance other than water molecules contained in a hydrous material according to claim 1, wherein the hydrous material has a temperature ranging from 0°C to 70°C in the step of adding an antifreeze protein to the hydrous material.

4. A method for inhibiting inactivation of a bioactive substance contained in a hydrous material during freezing of the hydrous material, the method comprising a step of adding an antifreeze protein to the hydrous material.

5. The method for inhibiting inactivation of a bioactive substance according to claim 4, wherein the hydrous material has a pH ranging from 2.0 to 11.0 in the step of adding an antifreeze protein to the hydrous material.

6. The method for inhibiting inactivation of a bioactive substance according to claim 4, wherein the hydrous material has a temperature ranging from 0°C to 70°C in the step of adding an antifreeze protein to the hydrous material.

7. A method for producing a frozen product or freeze-dried product by freezing or freeze-drying a hydrous material containing water molecules and a component other than water molecules, wherein the component other than water molecules is homogeneously dispersed in the frozen product or freeze-dried product, the method comprising a step of adding an antifreeze protein to the hydrous material.

8. The method for producing a frozen product or freeze-dried product according to claim 7, wherein the hydrous material has a pH ranging from 2.0 to 11.0 in the step of adding an antifreeze protein to the hydrous material.

9. The method for producing a frozen product or freeze-dried product according to claim 7, wherein the hydrous material has a temperature ranging from 0°C to 70°C in the step of adding an antifreeze protein to the hydrous material.
